# EUROPÄISCHE PATENTANMELDUNG

(11) **EP 2 110 471 A2**
(43) Veröffentlichungstag der Anmeldung: **21.10.2009**
(21) Anmeldenummer: 09002482.9
(22) Anmeldetag: 21.02.2009
(51) Int. Cl.: D03D 5/00, D03D 11/00, D03D 35/00

(54) **Gewebtes Halteband zur Verbindung zweier Bauteile**

(30) Priorität: 28.03.2008 DE 102008016278
(71) Anmelder: Carl Stahl GmbH & Co. KG, 89542 Herbrechtingen (DE)
(72) Erfinder: Brielmann, Roland, 89542 Herbrechtingen-Bissingen (DE); Renner, Juergen, 89542 Herbrechtingen-Hausen (DE)
(74) Vertreter: Schmid, Wolfgang

(57) **Zusammenfassung**

Ein gewebtes Halteband zur Verbindung zweier Bauteile weist ein Gewebe auf, welches mit einer Ausnehmung zur Anbringung eines Verbindungselements versehen ist und welches mehrere Kettfäden und mehrere Schussfäden sowie wenigstens einen Hilfsfaden aufweist, mit dem das Gewebe an wenigstens einer Seite verhäkelt ist. Das Gewebe weist wenigstens drei ausschließlich durch die Kettfäden miteinander verbundene Gewebelagen auf. Der Hilfsfaden weist eine geringere Stärke auf als die Schussfäden. Das Material des Hilfsfadens weist eine höhere Festigkeit auf als das Material der Schussfäden.

## Beschreibung

Die Erfindung betrifft ein gewebtes Halteband zur Verbindung zweier Bauteile, mit einem Gewebe, welches mit einer Ausnehmung zur Anbringung eines Verbindungselements versehen ist nach der im Oberbegriff von Anspruch 1 näher definierten Art.

Ein gattungsgemäßes Halteband zur Verbindung zweier Bauteile mit einer Ausnehmung zur Anbringung eines Verbindungselements ist aus der DE 20 2006 015 462 U1 bekannt.

Die Verwendung eines Hilfsfadens zur Verhäkelung des Gewebes an wengistens einer Seite ist in der EP 0 579 938 B1 und der EP 0 752 021 B1 beschrieben. Ein derartiger Hilfsfaden kann problemlos auch bei der Vorrichtung gemäß der DE 20 2006 015 462 U1 eingesetzt werden.

Derartige Bänder werden beispielsweise als sogenannte Fangbänder zum Anbringen eines Airbags an einem Karosserieteil eines Kraftfahrzeugs eingesetzt. Eine Möglichkeit zur Verbindung des Gewebebands mit einem der Bauteile besteht darin, das Halteband mit einer als Durchgangsloch ausgebildeten Ausnehmung zu versehen, in das ein Verbindungselement, beispielsweise ein Stahlbolzen, eingesteckt wird, wie dies bei der DE 20 2006 015 462 U1 praktiziert wird.

Problematisch dabei ist jedoch, dass dies zu einer erheblichen Schwächung des Haltebands führt, wodurch insbesondere auf die Schussfäden sehr hohe Kräfte einwirken.

Wenn dies bei aus dem allgemeinen Stand der Technik bekannten Lösungen dadurch umgangen wird, dass das Band an der hoch belasteten Stelle übereinandergelegt und die einzelnen Gewebelagen miteinander vernäht werden, so hat dies den Nachteil eines sehr hohen Fertigungsaufwands, der zu entsprechend hohen Kosten führt.

Es ist daher Aufgabe der vorliegenden Erfindung, ein gewebtes Halteband zur Verbindung zweier Bauteile zu schaffen, welches in der Lage ist, insbesondere auch in dem Bereich, in dem das Gewebe die Ausnehmung zur Aufnahme des Verbindungselements aufweist, hohe Kräfte aufzunehmen, wobei das Halteband mit möglichst geringem Fertigungsaufwand herstellbar sein soll.

Erfindungsgemäß wird diese Aufgabe durch die in Anspruch 1 genannten Merkmale gelöst.

Durch die wenigstens drei ausschließlich durch die Kettfäden selbst miteinander verbundenen Gewebelagen ergibt sich ein Halteband mit einer sehr viel höheren Festigkeit, das dementsprechend höhere Kräfte aufnehmen kann. Zusätzlich kann das erfindungsgemäße Halteband ein lockeres Gewebegefüge aufweisen, an welchem alle Kettfäden zur Aufnahme der in Längsrichtung wirkenden Zugkräfte gleich verteilt beitragen. Dadurch kann das erfindungsgemäße Halteband mit einer größeren Schussdichte, d.h. mit mehr Schussfäden pro cm, und/oder mit einem dickerem Schussgarn und somit höherer Fadenbruchlast versehen werden als dies bei bekannten Lösungen der Fall ist, was zu einer Steigerung der Ausreißfestigkeit im Bereich der Ausnehmung führt, da die Kettfäden aufgrund der Ausnehmung in dem Gewebe fast nur im Randbereich vorgesehen sind und daher nur einen sehr geringen Beitrag zur Festigkeit des Haltebands leisten können.

Durch die Verbindung der Gewebelagen ausschließlich durch die Kettfäden des Gewebes selbst und der dadurch möglichen Erhöhung des Schussanteiles kann vorteilhafterweise auf zusätzliche Näharbeiten verzichtet werden, was zu einem erheblich geringeren Fertigungsaufwand und somit zu einem kostengünstigeren Endprodukt führt.

Das erfindungsgemäße Gewebe weist des weiteren einen Hilfsfaden zur Sicherung des Gewebes auf, welcher zur Einbringung der hohen Schussdichte bzw. des hohen Schussanteiles einen geringeren Durchmesser als die Schussfäden aufweist und dadurch eine Verarbeitung erst ermöglicht. Um dabei die Festigkeit des gesamten Gewebes sicherzustellen, besteht der Hilfsfaden aus einem Material mit einer höheren Festigkeit als das Material der Schussfäden.

Wenn in einer sehr vorteilhaften Weiterbildung der Erfindung vorgesehen ist, dass jeder Kettfaden durch alle Gewebelagen des Gewebes verläuft, so kann vorteilhafterweise die maximale Anzahl an Schussfäden eingebracht werden, da alle Kettfäden in Zugrichtung des Haltebands gleich beansprucht werden. Dadurch kann ein relativ geringer Anteil an Kettfäden und ein relativ hoher Anteil an Schussfäden eingesetzt werden, was gerade bei dem erfindungsgemäßen, mit der Ausnehmung zur Aufnahme des Verbindungselements versehenen Halteband besonders vorteilhaft ist. Mit anderen Worten, durch den Verzicht auf separate Bindekettfäden, die in Zugrichtung wenig Kräfte aufnehmen können, sowie durch die Mehrlagigkeit des Gewebes im losen Gewebeverbund kann das Gewebe eine größere Anzahl an Schussfäden aufnehmen und so mit einer größeren Festigkeit ausgeführt werden.

Eine besonders hohe Reißfestigkeit des erfindungsgemäßen gewebten Haltebands ergibt sich, wenn das Verhältnis zwischen dem Kettanteil und dem Schussanteil zwischen 1:2 und 1,6:2 beträgt, da durch eine hohe Schussdichte und eine geringe Kettdichte die Ausreißfestigkeit des erfindungsgemäßen Haltebands gesteigert wird.

Des weiteren kann vorgesehen sein, dass die Schussfäden eine Stärke von wenigstens annähernd 1.670 dtex aufweisen, wobei wenigstens zwanzig Schussfäden pro Zentimeter der Länge des Gewebes vorgesehen sind. Eine derart hohe Anzahl an Schussfäden pro Zentimeter der Länge des Gewebes lässt sich nur durch die oben beschriebenen Maßnahmen realisieren und bietet eine extrem hohe Ausreißfestigkeit.

Als ein besonders guter Kompromiss zwischen einer hohen Festigkeit und einer guten Verarbeitbarkeit hat es sich herausgestellt, wenn das Gewebe vier Gewebelagen aufweist.

Um eine zu große Schwächung des Gewebes zu vermeiden, kann in einer weiteren vorteilhaften Ausgestaltung der Erfindung vorgesehen sein, dass die Breite des Gewebes mindestens doppelt so groß ist wie der Durchmesser der Ausnehmung.

Wenn des weiteren vorgesehen ist, dass in der Ausnehmung ein Niet angeordnet ist, dann ergibt sich eine bessere Verteilung der auf das erfindungsgemäße Gewebe einwirkenden Kraft.

Weitere vorteilhafte Ausgestaltungen und Weiterbildungen der Erfindung ergeben sich aus den restlichen Unteransprüchen. Nachfolgend sind Ausführungsbeispiele der Erfindung anhand der Zeichnung prinzipmäßig dargestellt.

Es zeigt:
- Fig. 1: eine sehr schematische Darstellung des erfindungsgemäßen gewebten Haltebands;
- Fig. 2: eine erste Ausführungsform der Bindung des erfindungsgemäßen Gewebes;
- Fig. 3: eine zweite Ausführungsform der Bindung des erfindungsgemäßen Gewebes;
- Fig. 4: eine erste Ausführungsform des Websystems des erfindungsgemäßen Gewebes; und
- Fig. 5: eine zweite Ausführungsform des Websystems des erfindungsgemäßen Gewebes.

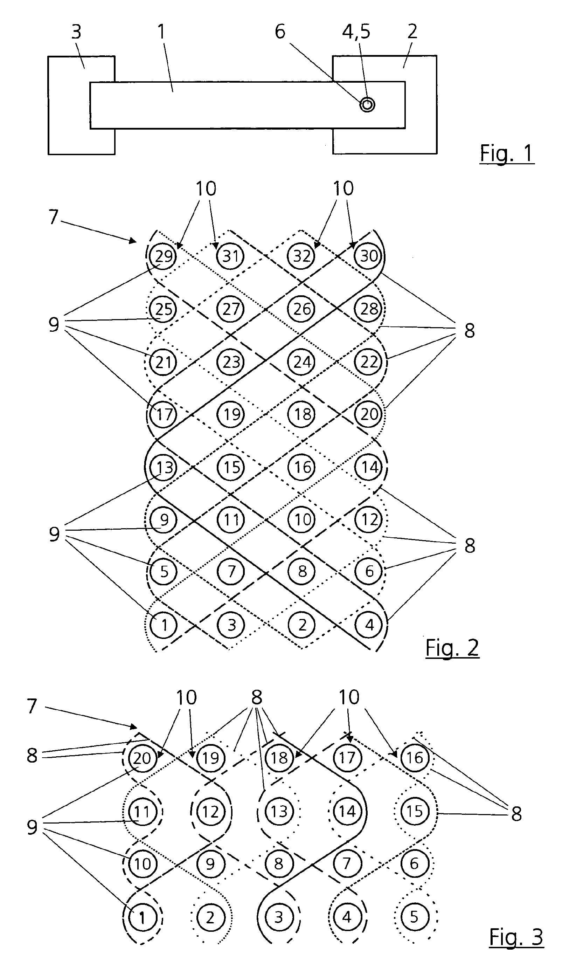

Fig. 1 zeigt ein Halteband 1 zur Verbindung zweier Bauteile 2 und 3. Im vorliegenden Fall handelt es sich bei dem Bauteil 2 um ein Karosseriebauteil eines nicht dargestellten Kraftfahrzeugs und bei dem Bauteil 3 um einen Airbag, der mittels des Haltebands 1 an dem Karosserieteil 2 befestigt ist.

Das Halteband 1 weist ein Loch bzw. eine Ausnehmung 4 auf, die zur Aufnahme eines im vorliegenden Fall als Metallbolzen oder Metallschraube ausgebildeten Verbindungselements 5 dient. Das Verbindungselement 5 stellt also die Verbindung zwischen dem Bauteil 2 und dem Halteband 1 her. Innerhalb der Ausnehmung 4 befindet sich im vorliegenden Fall ein Niet 6, das zum Schutz des Haltebands 1 dient und die durch das Verbindungselement 5 auf das Halteband 1 einwirkende Kraft besser verteilt.

Das Halteband 1 besteht aus einem Gewebe 7, von dem in Fig. 2 eine erste Ausführungsform detailliert dargestellt ist. Das Gewebe 7 weist mehrere Kettfäden 8 und mehrere Schussfäden 9 auf, wobei in dem dargestellten Schnitt insgesamt acht Kettfäden 8 und zweiunddreißig Schussfäden 9 zu erkennen sind. Der Übersichtlichkeit halber sind jedoch nicht alle Schussfäden 9 mit dem entsprechenden Bezugszeichen versehen. Durch die dargestellte Anordnung der Kettfäden 8 ergeben sich insgesamt vier Gewebelagen 10 des Gewebes 7, die ausschließlich durch die Kettfäden 8 miteinander verbunden sind, d.h. es wird auf zusätzliche Bindekettfäden verzichtet. Allgemein weist das Gewebe 7 wenigstens drei Gewebelagen 10 auf. Bei der Bindung des Gewebes 7 handelt es sich im dargestellten Ausführungsbeispiel um eine sogenannte englische Bindung, bei welcher jeder der Kettfäden 8 durch alle vier Gewebelagen 10 des Gewebes 7 verläuft und gleichberechtigt ist. Auch bei Geweben 7, die eine von vier unterschiedliche Anzahl an Gewebelagen 10 aufweist, kann bei der englischen Bindung vorgesehen sein, dass jeder Kettfaden 8 durch alle Gewebelagen 10 des Gewebes 7 verläuft.

Im vorliegenden Fall weist das Gewebe 7 über die gesamte Länge des Haltebands 1 die wenigstens drei Gewebelagen 10 auf, es ist jedoch auch möglich, das Gewebe 7 so auszuführen, dass die wenigstens drei Gewebelagen 10 nur über einen Teil der Länge des Haltebands 1 vorgesehen sind. Um eine ausreichende Festigkeit des Haltebands 1 zu gewährleisten, sollte vorzugsweise die Breite des Gewebes 7 mindestens doppelt so groß sein wie der Durchmesser der Ausnehmung 4 bzw. umgekehrt, der Durchmesser der Ausnehmung 4 sollte höchstens die Hälfte der Breite des Gewebes 7 betragen.

Um die Festigkeit des Gewebes 7 insbesondere in dem Bereich, in dem die Ausnehmung 4 vorgesehen ist, zu erhöhen, sind gegenüber bekannten Lösungen erheblich mehr Schussfäden 9 vorgesehen. Im vorliegenden Fall, in dem die Schussfäden 9 eine Stärke von ca. 1.670 dtex aufweisen, sind wenigstens zwanzig Schussfäden 9 pro Zentimeter der Länge des Gewebes 7 vorgesehen. Bei einer geringeren Garnstärke der Schussfäden 9 können selbstverständlich mehr Schussfäden 9 vorgesehen sein, wohingegen deren Anzahl bei einer Erhöhung der Garnstärke abnimmt. Bei dem dargestellten Ausführungsbeispiel, bei dem die Kettfäden 8 eine Garnstärke von ca. 1.100 dtex aufweisen, steht einem Kettanteil von 13 g/m (Gramm pro laufendem Meter) des Gewebes 7 ein Schussanteil von ca. 20 g/m gegenüber. Im Allgemeinen kann davon ausgegangen werden, dass das Verhältnis zwischen dem Kettanteil und dem Schussanteil zwischen 1:2 und 1,6:2 beträgt, so dass eine deutlich erhöhte Anzahl an Schussfäden 9 vorhanden ist, wodurch die Festigkeit des Gewebes 7 erheblich erhöht wird. Noch allgemeiner ist der Schussanteil mindestens so hoch, vorzugsweise höher, als der Kettanteil. Als Material für die Kettfäden 8 und/oder die Schussfäden 9 kommt neben anderen geeigneten Materialien beispielsweise Polyester oder Polyamid in Frage. Durch die Kombination von Garnfeinheit, Fadendichte und Garnmaterial wird also in Verbindung mit einem Mehrlagengewebe eine maximale Ausreißfestigkeit bei weitgehender Unabhängigkeit zur Zugfestigkeit erzielt.

Eine alternative Ausführungsform der Bindung des Gewebes 7, das in diesem Fall fünf Gewebelagen 10 aufweist, ist in Fig. 3 dargestellt. Zwar handelt es sich hierbei ebenfalls um eine englische Bindung, es verläuft jedoch nicht jeder Kettfaden 8 durch alle Gewebelagen 10 des Gewebes 7, was eine geringfügige Verringerung der Festigkeit zur Folge hat. Mit Ausnahme der beiden äußeren Kettfäden 8 verlaufen sämtliche Kettfäden 8, also im vorliegenden Fall insgesamt acht der zehn Kettfäden 8, über jeweils zwei benachbarte Gewebelagen 10. Selbstverständlich sind auch andere Bindungen des Gewebes 7 möglich, wobei darauf geachtet werden sollte, dass die Gewebelagen 10 des Gewebes 7 ausschließlich durch die Kettfäden 8 miteinander verbunden sind.

In den beiden in den Figuren 2 und 3 dargestellten Schnitten sind selbstverständlich jeweils nicht sämtliche Kettfäden 8 zu erkennen. Die Anzahl der Kettfäden 8 hängt dabei insbesondere von der Breite des Haltebands 1 ab.

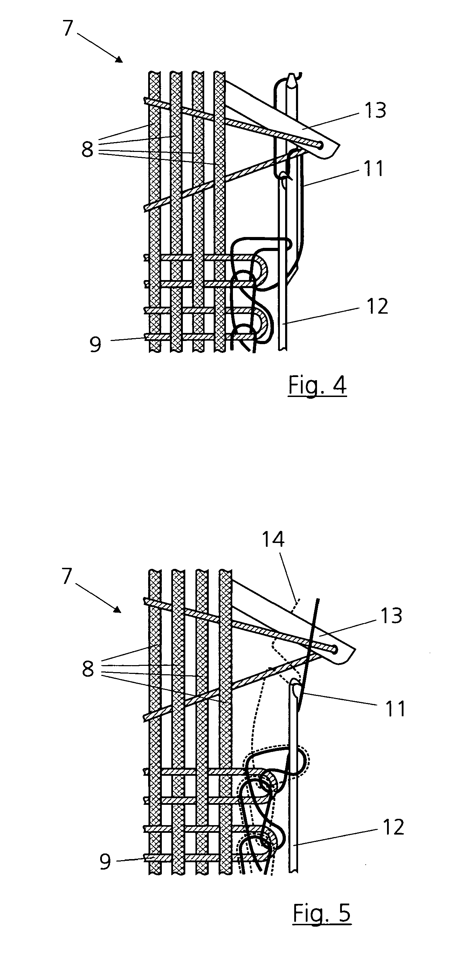

Eine andere Ansicht des Gewebes 7 ist in Fig. 4 dargestellt. Hierbei ist zu erkennen, dass das Gewebe 7 mit dem sogenannten Websystem 2 gewebt wird, bei dem ein zusätzlicher Hilfsfaden 11 mittels einer Nadel 12 hinter einer Schussnadel 13 so vorgelegt wird, dass ihn die Nadel 12 zuerst durch die Schussfadenschlaufe und dann durch die auf dem Nadelschaft liegende Hilfsfadenschlaufe ziehen und mit sich selbst verhäkeln kann. Durch die Verwendung des Websystems 2 wird eine verdickte Häkelkante vermieden.

Um das Verhäkeln des Gewebes 7 mit dem Hilfsfaden 11 zu erleichtern bzw. erst zu ermöglichen, weist der Hilfsfaden 11 eine geringere Stärke als die Schussfäden 9 auf. Im vorliegenden Fall kann bei einer Schussgarnfeinheit von 1.670dtex der Hilfsfaden 11 beispielsweise eine Stärke von 420 - 550 dtex aufweisen. Um in diesem Fall ein Ausreißen des Gewebes 7 am Rand und damit eine Beschädigung des Haltebands 1 zu vermeiden, besteht der Hilfsfaden 11 aus einem Material, das eine höhere Festigkeit aufweist als das Material der Schussfäden 9. Auf diese Weise erreicht der Hilfsfaden 11 wenigstens annähernd dieselbe Festigkeit wie jeder der Schussfäden 9. Allgemein kann der Hilfsfaden 11 aus einem hochfesten Material mit einer Feinheitsfestigkeit von mindestens dem 1,6-fachen des Materials der Schussfäden 9 bestehen. Bevorzugt wird für den Hilfsfaden 11 ein hochfestes Material mit einer Feinheitsfestigkeit von mind. 150cN/tex eingesetzt. Als Material für den Hilfsfaden 11 kommt beispielsweise Aramid in Frage, da dieses Material eine entsprechende Festigkeit aufweist und auch gute Beständigkeiten gegen die verschiedensten Chemikalien und gegen Hitze aufweist.

Eine alternative Ausführungsform zur Herstellung des Gewebes 7 ist in Fig. 5 dargestellt. Bei dieser als Websystem 5 bezeichneten Vorgehensweise wird der Hilfsfaden 11 durch die Schussfadenschlaufe gezogen und zusammen mit einem Sperrfaden 14 verhäkelt, wodurch eine Laufmaschensicherheit gegeben ist. Der Hilfsfaden 11 wird wie bei dem unter Bezugnahme auf Fig. 4 beschriebenen Websystem 5 so vorgelegt, dass ihn die Nadel 12 durch die Schussfadenschlaufe ziehen und dann zusammen mit dem Sperrfaden 14 verhäkeln kann. Der Sperrfaden 14, der zur Sicherung des Hilfsfadens 11 dient, kann beispielsweise aus Polyester bestehen und eine Stärke von ca. 280 dtex aufweisen.

## Patentansprüche

1. Gewebtes Halteband zur Verbindung zweier Bauteile, mit einem Gewebe, welches mit einer Ausnehmung zur Anbringung eines Verbindungselements versehen ist und welches mehrere Kettfäden und mehrere Schussfäden sowie wenigstens einen Hilfsfaden aufweist, mit dem das Gewebe an wenigstens einer Seite verhäkelt ist,
**dadurch gekennzeichnet, dass**
das Gewebe (7) wenigstens drei ausschließlich durch die Kettfäden (8) miteinander verbundene Gewebelagen (10) aufweist, dass der Hilfsfaden (11) eine geringere Stärke aufweist als die Schussfäden (9), und dass das Material des Hilfsfadens (11) eine höhere Festigkeit aufweist als das Material der Schussfäden (9).

2. Gewebtes Halteband nach Anspruch 1,
**dadurch gekennzeichnet, dass**
jeder Kettfaden (8) durch alle Gewebelagen (10) des Gewebes (7) verläuft.

3. Gewebtes Halteband nach Anspruch 1 oder 2,
**dadurch gekennzeichnet, dass**
das Verhältnis zwischen dem Kettanteil und dem Schussanteil zwischen 1:2 und 1,6:2 beträgt.

4. Gewebtes Halteband nach Anspruch 1, 2 oder 3,
**dadurch gekennzeichnet, dass**
die Schussfäden (9) eine Stärke von wenigstens annähernd 1.670 dtex aufweisen, wobei wenigstens zwanzig Schussfäden (9) pro Zentimeter der Länge des Gewebes (7) vorgesehen sind.

5. Gewebtes Halteband nach einem der Ansprüche 1 bis 4,
**dadurch gekennzeichnet, dass**
die Kettfäden (8) und/oder die Schussfäden (9) aus Polyester oder Polyamid bestehen.

6. Gewebtes Halteband nach einem der Ansprüche 1 bis 5,
**dadurch gekennzeichnet, dass**
der Hilfsfaden (11) eine Stärke von 420 - 550 dtex aufweist.

7. Gewebtes Halteband nach einem der Ansprüche 1 bis 6,
**dadurch gekennzeichnet, dass**
der Hilfsfaden (11) aus einem hochfesten Material mit einer Feinheitsfestigkeit von mind. dem 1,6-fachen des Materials der Schussfäden (9) besteht.

8. Gewebtes Halteband nach einem der Ansprüche 1 bis 7,
**dadurch gekennzeichnet, dass**
der Hilfsfaden (11) aus einem hochfesten Material mit einer Feinheitsfestigkeit von mind. 150cN/tex besteht.

9. Gewebtes Halteband nach einem der Ansprüche 1 bis 8,
**dadurch gekennzeichnet, dass**
der Hilfsfaden (11) aus Aramid besteht.

10. Gewebtes Halteband nach einem der Ansprüche 1 bis 9,
**dadurch gekennzeichnet, dass**
ein zusätzlicher Sperrfaden (14) vorgesehen ist, der aus Polyester besteht.

11. Gewebtes Halteband nach einem der Ansprüche 1 bis 10,
**dadurch gekennzeichnet, dass**
das Gewebe (7) vier Gewebelagen (10) aufweist.

12. Gewebtes Halteband nach einem der Ansprüche 1 bis 11,
**dadurch gekennzeichnet, dass**
die Breite des Gewebes (7) mindestens doppelt so groß ist wie der Durchmesser der Ausnehmung (4).

13. Gewebtes Halteband nach einem der Ansprüche 1 bis 12,
**dadurch gekennzeichnet, dass**
in der Ausnehmung (4) ein Niet (6) angeordnet ist.

14. Gewebtes Halteband nach einem der Ansprüche 1 bis 13,
**dadurch gekennzeichnet, dass**
das Gewebe (7) über die gesamte Länge des Haltebands (1) die wenigstens drei Gewebelagen (10) aufweist.

15. Gewebtes Halteband nach einem der Ansprüche 1 bis 13,
**dadurch gekennzeichnet, dass**
das Gewebe (7) nur über einen Teil der Länge des Haltebands (1) die wenigstens drei Gewebelagen (10) aufweist.
